# EUROPEAN PATENT APPLICATION

(11) **EP 1 550 966 A1**
(43) Date of publication of application: **06.07.2005**
(21) Application number: 04028820.1
(22) Date of filing: 06.12.2004
(51) Int. Cl.: G06F 17/60

(54) **System and method for identifying and cataloguing vehicles**

(30) Priority: 31.12.2003 IT BO20030795
(71) Applicant: I.CAR S.r.l., 40128 Bologna (IT)
(72) Inventor: Muriana, Roberto, 40123 Bologna (IT)
(74) Representative: Provvisionato, Paolo

(57) **Abstract**

A system for identifying and cataloguing vehicles, and for creating and subsequently managing a corresponding databank, comprises means for archiving a plurality of items of information, means for acquiring additional information relating to safety elements, exterior elements and optional elements of the said vehicles, recording means for recording the acquired information in groups of information in a predetermined order, and transmission means for transferring the said groups of information to the said archiving means.

## Description

The present invention relates to the sector of vehicle identification systems, and in particular, although not exclusively, to a method for identifying and cataloguing vehicles and for creating and subsequently managing a corresponding databank.

The invention has been developed with particular regard to a method for identifying vehicles in relation to insurance cover, and specifically in relation to the various areas of risk insurance associated with the ownership and operation of vehicles.

The best-known vehicle identification system is that which is normally used by the specific public register for each category of vehicle, such as motor cars, ships, aircraft, etc. These systems provide for the identification of the principal technical or registration data relating to each vehicle and its owner by means of a number, usually a progressive number. In the case of motor vehicles, for example, each vehicle is associated with a registration number, the make, the model, the cylinder capacity, the engine power, the chassis number, the type of tyres, the intended use, and the registration data for the owner of the vehicle.

Another known vehicle identification system is that which comprises the permanent marking of the windows of a motor vehicle, in which a predetermined code, for example but not exclusively the registration number or chassis number of the motor vehicle, is impressed on all the windows in a visible and indelible way.

Other known systems which can be used for identifying a vehicle require, for example, the provision of a memory chip fixed to the vehicle itself, the characteristic technical data of the vehicle being stored on this chip, together with data regarding the owner and the servicing carried out if required.

All the known identification systems therefore relate to technical data and/or registration information, either for the vehicle or for the owner, available at the time of registration of the said vehicle. The use of these technical data is particularly effective, above all, for correlating the data on the owner with certain data on the vehicle. This may, for example, relate to the imposition of penalties for violation of the highway code on the basis of the registration number, or the payment of ownership taxes on the basis of the type of vehicle and its year of registration.

The object of the present invention is to provide a method for identifying and cataloguing vehicles which is particularly effective in relation to the acceptance of risk in the case of insurance cover.

Another object of the present invention is to provide a method for identifying and cataloguing vehicles and for subsequently managing a corresponding databank which is advantageous for the insurance company at the time of conclusion of an insurance contract, for the customer in case of theft or loss of the vehicle, and finally for the trader when the vehicle is bought and sold. A further object of the present invention is to provide a method which is simple to implement and use.

In order to achieve these objects, the invention proposes a system and a method as defined in the claims below.

One of the principal advantages of the present invention lies in the possibility of evaluating the acceptance of risk in a more efficacious way, for example in the case of insurance contracts covering fire and theft of a motor vehicle. It is known that the premium required by an insurance company for insurance cover of the aforesaid risk is closely related to the technical data for the vehicle available at the time of its identification in a public register. In the case of a motor vehicle, for example, the insurance premium is related to the type (make, model and cylinder capacity) of the vehicle and also to its year of registration.

However, in the case of used vehicles, this last-mentioned information does not necessarily relate to the actual condition of the vehicle. Over the years the vehicle may have undergone numerous modifications, resulting in improvement, due to efficient servicing for example, or in deterioration, due for example to lack of care or undeclared accidents. The actual value of the vehicle can therefore vary substantially from a standard theoretical valuation for the field, either advantageously or disadvantageously for the insurance company and/or the insured. The assessment of the risk of any accidents, in case of a third-party liability policy, can also be dependent on the actual operating condition of the vehicle and/or any variations of the basic characteristics relating to the safety of the vehicle and its operation (for example wide tyres, ABS systems and radar systems).

The identification method according to the present invention can be used to provide dynamic information on the motor vehicle, which can be updated, for example, at the time of conclusion of an insurance contract and/or on the purchase or transfer of the vehicle, and which can be helpful for the assessment of the risk accepted.

A further advantage of the present invention is provided by the greater ease of tracing the vehicle in case of loss or theft. In addition to the usual information already present in the public registers, the identification method according to the present invention can be used to archive, and then to retrieve if necessary, additional information which can permit faster and easier identification of the motor vehicle on the basis of the external characteristics alone. This archive can be made available to the police authorities for the immediate identification of vehicles in case of theft, or in case of accidents in which any witnesses can only recall the most general external characteristics.

Finally, another advantage of the present invention lies in the possibility of managing in electronic format, and remotely, all the information required for a more accurate assessment of the vehicle. For example, in case of a sale, the information from the identification system according to the present invention can be published on the Internet in support of the remote sale of the motor vehicle, or, if an accident is found to have occurred, the aforesaid information can be retrieved remotely, thus facilitating the comparison of the actual condition of the vehicle before and after the accident.

Further characteristics and advantages will be made clear by the following description of a preferred embodiment, provided solely by way of example and without restrictive intent.

A method for identifying and cataloguing vehicles and for creating and subsequently managing a corresponding databank comprises the step of providing means of archiving a plurality of items of information, and in particular a general archive of groups of information. Each group of information is related to a specific motor vehicle and comprises a file containing technical data and additional information on this vehicle. The method also comprises the provision of storage means, for example, but not exclusively, electronic storage means for storing the files, and transmission means for transferring the information contained in the files to the general archive. The method also comprises the provision of cataloguing means for cataloguing and indexing the files contained in the general archive.

Each file, which is preferably but not exclusively of an electronic, paper, or other type, comprises the technical data for the vehicle as present in the corresponding public registers, in other words the registration data for the vehicle and for the vehicle's owner. For example, in the case of a motor vehicle, the technical data can comprise the registration number, the make, the model, the cylinder capacity, the engine power, the chassis number, the type of tyres, and the intended use.

Each file also comprises additional information relating to different characteristics of the vehicle. This information can comprise, for example, but not exclusively, external technical characteristics of the motor vehicle, to permit easier identification of the vehicle, by remote action if necessary, or technical characteristics related to the safety of the vehicle, to provide additional data for the assessment of the reliability of the said vehicle, or further characteristics of any kind other than the aforesaid technical data. Examples of possible additional information, listed here purely by way of example, are information on the type of bodywork (whether original, whether modified, colour, type of paintwork), on the wheel rims (whether original, alloy), on added load-carrying means (luggage racks, ski racks), on the interior finish, on added trim and/or decorations on the bodywork, and/or on added electronic equipment inside the vehicle (GPS systems, radar, televisions, radio).

All the information can be entered into the file in the form of a detailed description, by means of an image (photographic or film) and/or by a combination of the two. The information can be stored on a paper medium and/or on an electronic medium, and kept in the vehicle itself (on a microchip, for example) or remotely at an information collection centre. Preferably, when the information is stored in electronic format, each file can be linked to the public registers in such a way that it can be updated in real time if there is a change in the registration data present in these registers.

All the files relating to the corresponding vehicles are thus collected and organized in such a way as to create a single general archive, for example, but not exclusively, an electronic databank, from which the necessary information can be quickly and easily retrieved at a later time. The archive can be structured and organized according to predetermined indexing parameters, which enable all the files present to be catalogued according to a predetermined logic, and can comprise, in the case of an electronic databank, search engines, indexed or otherwise, for simpler and faster consultation.

In one of the preferred embodiments of the present invention, a vehicle which is to be input into the databank of the identification system according to the present invention is brought to an authorized identification centre. A customized file for this vehicle is created at the authorized centre, for example, but not exclusively, by entering the technical data for the vehicle on an electronic medium, preferably a hard disk of an electronic computer.

Subsequently, all the additional information for this specific vehicle is entered into the file. The information can be entered sequentially in a predetermined order, or in random order, or in a single entry, for example in the form of a film clip showing the exterior and interior of the vehicle. The order of entry can be established according to predetermined parameters, for example, but not exclusively, by first entering all the information relating to the appearance (bodywork, rims, added load carriers), and then all the information relating to safety (tyres, radar, ABS systems), and finally all the optional elements relating to passenger comfort (radio, television, GPS systems). Clearly, the aforesaid elements can cover the whole vehicle, or parts or sections of it, according to their technical characteristics.

As stated previously, if the information is entered in descriptive form, an operator enters a detailed description of the element into the computer via a keyboard, or by dictation with storage on an electronic medium, or by clicking on a general-purpose menu comprising all possible elements which can be associated on the specific vehicle, or by reading a plurality of bar codes, each corresponding to one of the aforesaid elements.

If the information is entered in the form of an image, an operator takes one or more photographs and/or film clips, each representing the aforesaid elements, and then transfers the said images to electronic format on the computer. The images and/or the film clips can be taken with ordinary image acquisition devices, such as cameras and movie cameras, digital or otherwise, or with more complicated acquisition devices such as infrared or X-ray video cameras for highlighting specific and particular elements of the vehicle.

The file created in this way and stored on a personal computer is entered into the general databank by electronic transmission means, such as a remote link using a modem. Alternatively, the file can be stored on a transportable electronic medium, such as a CD-ROM, a tag, a microchip or other similar device, and the said medium can be sent to the data collection centre by ordinary carriage systems (post, courier).

The owner of the vehicle can be given a copy of the file on a paper or electronic medium, on a CD-ROM, or on a microchip to be fitted to the vehicle, so that the owner can supply all the information on his vehicle at the request of a third party.

Whenever one or more of the additional items of information present initially in the file has to be modified, for example in case of an accident, in the course of periodic mechanical inspection, or when elements of the vehicle are added and/or removed, these variations must also be entered into the file via one of the authorized identification centres or via other authorized organizations. Thus the information stored in the general databank is constantly updated at the correct time.

According to a particularly advantageous characteristic of the present invention, the method for identifying and cataloguing vehicles and for creating and subsequently managing a corresponding databank additionally comprises a step of providing means for safeguarding and certifying the information entered into the system and stored in it. In particular, each authorized identification centre is provided with an identification code issued by a predetermined certification authority which allows the operators of the authorized centre to access the general databank. The identification code is added to each file created by each authorized centre, so that, before new information is entered into the general databank, the correct origin of each file can be checked, and the entry of the information can be authorized if the identification code is authentic. The identification code can also be used by the owner of the vehicle to check the certification of the authorized centre to which he intends to take his vehicle. The identification code also serves to guarantee the correctness and authenticity of the information contained in the file to any parties who must consult the file to extract information on the vehicle, such as centres for servicing the vehicle and/or the police authorities.

Clearly, the identification code can be generated, entered, stored and protected by various different known procedures. Purely by way of example, it may be mentioned that an identification code can be entered into the system by means of a digital key, for example a digital signature, and can be protected, as can the whole file, by means of encryption systems. This solution is particularly advantageous, especially when the file is stored on an electronic medium which is fitted to the vehicle is therefore more easily accessible to strangers.

As indicated in the introductory part of the present description, the method for identifying and cataloguing vehicles and for creating and subsequently managing a corresponding databank was developed with particular regard to insurance cover. For this purpose, the method comprises the step of providing a generic insurance policy for vehicles, comprising a plurality of different benefits and covers according to the type of vehicle to be insured. As stated above, these conditions are generally associated with the specific technical data of a predetermined type of vehicle, and vary widely according, for example, to the make, the model, the cylinder capacity and the year of registration of the vehicle.

The method therefore comprises a step of retrieving the file relating to the said specific vehicle in the form in which it has been entered and/or updated in the previously described identification and cataloguing system according to the present invention. This file comprises both the technical data and all the additional information on the vehicle.

The method therefore comprises a step of comparison between the technical data contained in the file and the specific conditions of the policy, to establish the benefits and cover for the specific vehicle.

Finally, the method comprises a step of parameterizing the additional information in such a way as to customize the aforesaid conditions of the insurance policy, and, in particular, the benefits and cover for the policy of the specific vehicle.

In one embodiment of the aforesaid method, each owner intending to conclude an insurance contract for a vehicle having specific conditions is offered the possibility of creating a customized file for his vehicle, for example at one of the authorized identification centres, using the procedures described above.

The owner then supplies to the insurance company, or authorizes it to retrieve, all the information in the file required to adapt the conditions of the insurance contract to his vehicle.

If the customer intends to cancel the insurance contract and take out a new contract with a different insurance company, the file of information can be transferred, in the case of either a paper file or an electronic file, to the new insurance company. Thus the new insurance company can use all the information in the file to assess more precisely the risk to be accepted and any details of the new contract.

The method according to the present invention can be used to create a detailed archive of all the vehicles operating in the country. This archive can be made available to all insurance companies and to the police authorities, and also, for example, to used car vendors, to producers of accessories, and in general to all those working in the after-sales area of the motor vehicle trade. Finally, the information on the vehicles kept in this archive can be processed according to one or more relevant parameters to produce reports indicating market trends in the customization of owners' vehicles or on customers' preferences for one or more of the aforementioned elements of vehicles.

In addition to the aforesaid advantages, which are undeniably important, the method according to the present invention can be used to optimize and accelerate the assessment procedures in case of accidents. The information on the vehicle obtained after inspection by an insurance adjuster can be easily and rapidly compared with the information present in the archive, to facilitate the operations of estimating the damage suffered as a result of the accident. The method also makes the aforesaid assessment more reliable, since the comparison is made with reliable and documented information rather than with the estimated information supplied by the owner of the vehicle himself.

Clearly, when an insurance contract is concluded and a vehicle is entered into the identification system according to the present invention, it is possible to envisage a number of incentives both for the customer and for the selling organization and the sales personnel. For example, the customer may be offered an insurance premium which is particularly advantageous in financial terms, or convenient payment procedures, or auxiliary benefits. The vehicle selling organization and its sales personnel can be offered a financial incentive in the form of a lump sum or commission.

Finally, the system for identifying and cataloguing vehicles and for creating and subsequently managing a corresponding databank according to the present invention can increase the efficacy of known theft deterrence systems, since the additional information in each file can be made available very quickly to the police authorities operating on the highways, thus facilitating the identification of a stolen vehicle.

Clearly, provided that the principle of the invention is retained, the characteristics of implementation and the details of embodiment of the present invention can be varied widely with respect to what has been described and illustrated, without thereby departing from the scope of the present invention.

## Claims

1. System for identifying and cataloguing vehicles and creating and subsequently managing a corresponding databank, **characterized in that** it comprises:
- means of archiving a plurality of items of information;
- acquisition means for acquiring additional information on vehicles, the said information comprising safety elements, exterior elements and optional elements of the said vehicles;
- recording means for recording the acquired information in groups of information in a predetermined order;
- transmission means for transferring the said groups of information to the said archiving means.

2. System according to Claim 1, **characterized in that** it also comprises indexing means for indexing and organizing the said groups of information in the said archiving means.

3. System according to Claim 2, **characterized in that** the archiving means comprise at least one electronic databank.

4. System according to Claim 1, **characterized in that** the said information comprises one or more technical characteristics of a vehicle included in the following set of groups of characteristics:
type of bodywork, type of wheel rims, added load carriers, type of interior finish, added trim and/or decoration on the bodywork, and type of added electronic equipment inside and outside the vehicle.

5. System according to Claim 4, **characterized in that** it also comprises means for safeguarding and electronically certifying the information transmitted to and archived in the electronic databank.

6. Method for identifying and cataloguing vehicles, **characterized in that** it comprises the following steps:
- providing at least one vehicle for which a plurality of information is to be identified;
- selecting and identifying additional groups of information, comprising safety elements, exterior elements and optional elements of the said vehicle; and
- recording the said additional information and transferring it to archiving means.

7. Method according to Claim 6, **characterized in that** the said information is recorded in the form of images.

8. Method for identifying and cataloguing vehicles and for creating and subsequently managing a corresponding databank for the monitoring of insurance cover, **characterized in that** it comprises the following steps:
- providing an insurance policy comprising a plurality of benefits and forms of cover, the said policy being associated with technical data of a predetermined type of vehicle;
- retrieving groups of information recorded by the method defined in Claim 6 and relating to a specific vehicle belonging to the said predetermined type of vehicle;
- linking and comparing the said technical data with the information on the said specific vehicle; and
- modifying the benefits and cover of the insurance policy for the said specific vehicle according to the results of the said comparison.
